# EUROPEAN PATENT SPECIFICATION

(11) **EP 4 322 383 B1**
(45) Date of publication and mention of the grant of the patent: **28.01.2026**
(21) Application number: 23190732.0
(22) Date of filing: 10.08.2023
(51) Int. Cl.: H02M 1/32, H02M 7/487

(54) **INVERTER AND CONTROL METHOD THEREOF**
WECHSELRICHTER UND STEUERUNGSVERFAHREN DAFÜR
ONDULEUR ET SON PROCÉDÉ DE COMMANDE

(30) Priority: 10.08.2022 CN 202210959214
(43) Date of publication of application: 14.02.2024
(73) Proprietor: Huawei Digital Power Technologies Co., Ltd., Shenzhen, Guangdong 518043 (CN)
(72) Inventor: YAO, Yuan, Shenzhen 518043 (CN); YU, Xinyu, Shenzhen 518043 (CN); XIN, Kai, Shenzhen 518043 (CN)
(74) Representative: Gill Jennings & Every LLP

(56) References cited:
- US-A1- 2015 214 856
- US-A1- 2019 190 403
- US-B2- 9 543 855

## Description

### TECHNICAL FIELD

This application relates to the field of electronic power technologies, and in particular, to an inverter, a control method thereof, and a power supply system.

### BACKGROUND

When low voltage ride through (Low voltage ride through, LVRT) occurs, a power generation device is required to be kept operating without disconnection from a power grid within a specific voltage range. In addition, according to a related standard, the power generation device such as an inverter needs to provide specific reactive power to support the power grid during the low voltage ride through. In this case, an increase of an output current may cause overtemperature of some components (for example, a neutral point clamping diode) in the inverter, and damage the some components. In an existing technical solution, a component of large specification is generally selected, or an output capability is limited. However, this may increase costs, and in a fault case, limit a power generation capability or make it impossible to provide reactive power support. US 9543855 B2 discloses a voltage source converter with neutral-point-clamped topology. US 20190190403 A1 discloses a system-connected inverter device.

### SUMMARY

Embodiments of this application provide an inverter, a control method thereof, and a power supply system. It can be ensured that thermal stress borne by two neutral point clamping diodes is within a safe range. This avoids component damage caused by overheating of the two neutral point clamping diodes, and ensures normal operation of a circuit.

According to a first aspect, an embodiment of this application provides an inverter as disclosed in independent claim 1.

In another possible design, the detection control unit is further configured to control, when the temperatures of the two neutral point clamping diodes do not exceed the first preset threshold, the on-duration of the first switching tube and/or the fourth switching tube in one switching cycle to be second duration. The second duration is within a preset threshold interval. The preset threshold interval is a time range in which the first switching tube and/or the fourth switching tube are/is in an on state in one switching cycle when the inverter is in the normal operating state. The normal operating state indicates an operating state when the temperatures of the two neutral point clamping diodes in the inverter do not exceed the first preset threshold. That is, when the temperatures of the two neutral point clamping diodes do not exceed the first preset threshold, the on-duration of the first switching tube and/or the fourth switching tube is restored to the time range in the normal operating state. Therefore, the current passing through the two neutral point clamping diodes is dynamically adjusted based on the temperatures of the two neutral point clamping diodes. This not only ensures that the thermal stress borne by the two neutral point clamping diodes is within the safe range, but also ensures normal operation of the inverter.

In another possible design, the detection control unit is further configured to start to detect, when it is detected that a voltage at a grid-tied point of the inverter is less than a third preset threshold or a current at a grid-tied point of the inverter is greater than a fourth preset threshold, the temperatures of the two neutral point clamping diodes. When it is detected that a voltage at a grid-tied point of the inverter is not less than a third preset threshold and a current at a grid-tied point of the inverter is not greater than a fourth preset threshold, detection of the temperatures of the two neutral point clamping diodes may be stopped. That is, the circuit is not detected when low voltage ride through does not occur. Therefore, operating efficiency of the circuit is ensured, and electric energy loss is reduced.

In another possible design, the inverter is a three-level neutral point clamped inverter.

According to a second aspect, an embodiment of this application provides a control method for an inverter as disclosed in independent claim 6.

In another possible design, when the temperatures of the two neutral point clamping diodes do not exceed the first preset threshold, the on-duration of the first switching tube and/or the fourth switching tube in one switching cycle is controlled to be second duration. The second duration is within a preset threshold interval. The preset threshold interval is a time range in which the first switching tube and/or the fourth switching tube are/is in an on state in one switching cycle when the inverter is in the normal operating state. The normal operating state indicates an operating state when the temperatures of the two neutral point clamping diodes in the inverter do not exceed the first preset threshold. That is, when the temperatures of the two neutral point clamping diodes do not exceed the first preset threshold, the on-duration of the first switching tube and/or the fourth switching tube is restored to the time range in the normal operating state. Therefore, the current passing through the two neutral point clamping diodes is dynamically adjusted based on the temperatures of the two neutral point clamping diodes. This not only ensures that the thermal stress borne by the two neutral point clamping diodes is within the safe range, but also ensures normal operation of the inverter.

In another possible design, when low voltage ride through occurs, a voltage at a grid-tied point of the inverter is less than a third preset threshold, or a current at a grid-tied point of the inverter is greater than a fourth preset threshold. The temperatures of the two neutral point clamping diodes may exceed a safe range only when the low voltage ride through occurs. When it is detected that the voltage at the grid-tied point of the inverter is less than the third preset threshold or the current at the grid-tied point of the inverter is greater than the fourth preset threshold, the temperatures of the two neutral point clamping diodes start to be detected. When it is detected that the voltage at the grid-tied point of the inverter is not less than the third preset threshold and the current at the grid-tied point of the inverter is not greater than the fourth preset threshold, detection of the temperatures of the two neutral point clamping diodes may be stopped. That is, the circuit is not detected when the low voltage ride through does not occur. Therefore, operating efficiency of the circuit is ensured, and electric energy loss is reduced.

According to a third aspect, this application provides a power supply system. The power supply system includes a photovoltaic array and the inverter that is connected to the photovoltaic array and that is provided in the first aspect and any possible implementations of the first aspect. The photovoltaic array is configured to send electric energy obtained through conversion to the inverter for inversion processing. In the inverter, the detection control unit detects the temperatures of the two neutral point clamping diodes, and adjusts the on-duration of the first switching tube and/or the fourth switching tube in one switching cycle based on the temperatures of the two neutral point clamping diodes to control the current flowing through the two neutral point clamping diodes. In this way, it is ensured that thermal stress borne by the two neutral point clamping diodes is within a safe range. This avoids component damage caused by overheating of the two neutral point clamping diodes, and ensures normal operation of a circuit. Because there is no need to select a component of a large specification or limit an output capability, costs may be reduced, and reactive power support may be provided while a power generation capability is ensured.

### BRIEF DESCRIPTION OF DRAWINGS

To describe the technical solutions in embodiments of this application or in the background more clearly, the following describes the accompanying drawings for describing embodiments of this application or the background.
FIG. 1 is a schematic diagram of an application scenario of an inverter according to this application;
FIG. 2 is a schematic diagram of another application scenario of an inverter according to this application;
FIG. 3 is a schematic diagram of a structure of an inverter according to this application;
FIG. 4 is a schematic diagram of a structure of a detection control unit according to this application;
FIG. 5 is a schematic diagram of a pulse width modulated signal in a three-level operating mode according to an embodiment of this application;
FIG. 6 is a schematic diagram of a current flow direction when an inverter operates at a "+1" level;
FIG. 7 is a schematic diagram of a current flow direction when an inverter operates at a "-1" level;
FIG. 8 is a schematic diagram of a current flow direction when an inverter operates at a "0" level;
FIG. 9 is a schematic diagram of a pulse width modulated signal in a two-level operating mode according to an embodiment of this application;
FIG. 10 is a schematic diagram of another pulse width modulated signal in a three-level operating mode according to an embodiment of this application;
FIG. 11 is a schematic diagram of a structure of a power supply system according to this application; and
FIG. 12 is a schematic flowchart of a control method for an inverter according to this application.

### DESCRIPTION OF EMBODIMENTS

The following describes embodiments of this application with reference to the accompanying drawings in embodiments of this application.

An inverter provided in this application may be used in a plurality of fields, for example, the field of energy smart microgrids, the field of power transmission and distribution or new energy (for example, the field of grid-tied photovoltaic power generation or grid-tied wind power generation), the field of photovoltaic energy storage power generation (for example, supplying power to a household device (for example, a refrigerator or an air conditioner) or a power grid), the field of wind energy storage power generation, or the field of high-power converters (for example, converting a direct current into a high-power high-voltage alternating current). This may be specifically determined based on an actual application scenario, and is not limited herein. A power supply system provided in this application may be used in different application scenarios, for example, a photovoltaic energy storage power supply application scenario, a wind energy storage power supply application scenario, a pure energy storage power supply application scenario, or another application scenario. The following uses an energy storage power supply application scenario as an example for description, and details are not described below again.

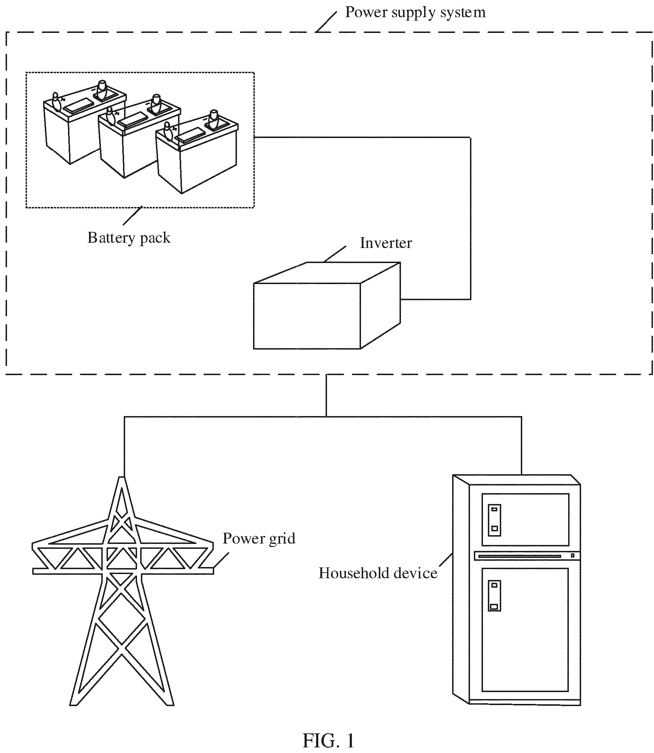

FIG. 1 is a schematic diagram of an application scenario of an inverter according to this application. In the pure energy storage power supply application scenario, as shown in FIG. 1, the power supply system includes a battery pack and an inverter. The inverter may be a direct current (direct current, DC)/alternating current (alternating current, AC) converter. In a process in which the power supply system supplies power to a load, the inverter may convert a direct current output by the battery pack into an alternating current for use by an alternating current load such as a communication base station or a household device in an alternating current power grid.

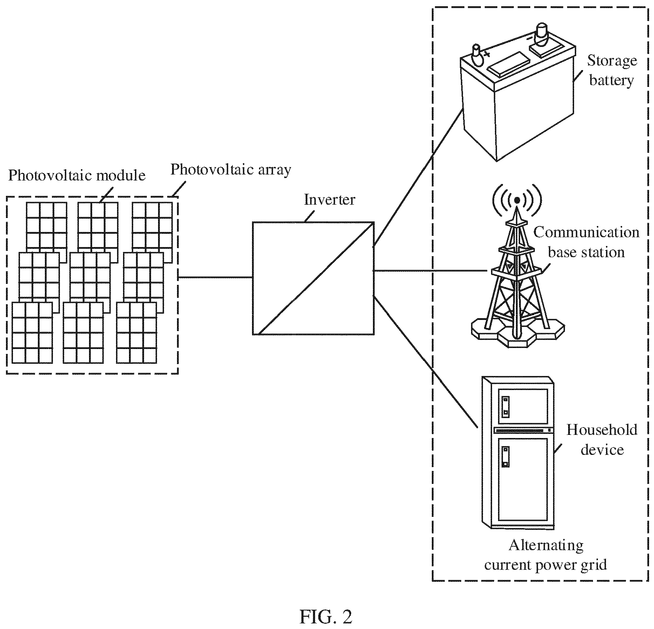

FIG. 2 is a schematic diagram of another application scenario of an inverter according to this application. In an application scenario of a photovoltaic system, the inverter may be a photovoltaic inverter. An output end of a photovoltaic array may be connected to an input end of the photovoltaic inverter. An output end of the photovoltaic inverter is connected to an alternating current power grid. The photovoltaic inverter may convert a direct current input by the photovoltaic array into an alternating current and send the alternating current to the alternating current power grid. In the photovoltaic system shown in FIG. 2, the photovoltaic array may be a photovoltaic module group. One photovoltaic module group may include one or more photovoltaic strings connected in parallel. One photovoltaic string may be obtained by connecting one or more photovoltaic modules in series. The photovoltaic module herein may be a solar panel, a photovoltaic panel, or an energy storage battery. In other words, in the photovoltaic system shown in FIG. 2, one photovoltaic string may be obtained by connecting one or more solar panels, photovoltaic panels, or energy storage batteries in series. Output currents of a plurality of photovoltaic strings may provide a direct current input voltage for the photovoltaic inverter. The photovoltaic inverter performs voltage power conversion on the direct current input voltage for use by an electric device such as a battery, a communication base station, or a household device in the alternating current power grid.

In the application scenarios shown in FIG. 1 and FIG. 2, when low voltage ride through occurs, a power generation device such as the inverter needs to provide specific reactive power to support the power grid. In this case, an increase of a current at a grid-tied point of the inverter may cause overtemperature of some components (for example, a neutral point clamping diode) in the inverter, and damage some components. Therefore, during the low voltage ride through, the current flowing through the neutral point clamping diode is reduced by detecting a temperature of the neutral point clamping diode and changing a modulation mode. In this way, electrical damage caused by overheating of the component is avoided while reactive power support is ensured.

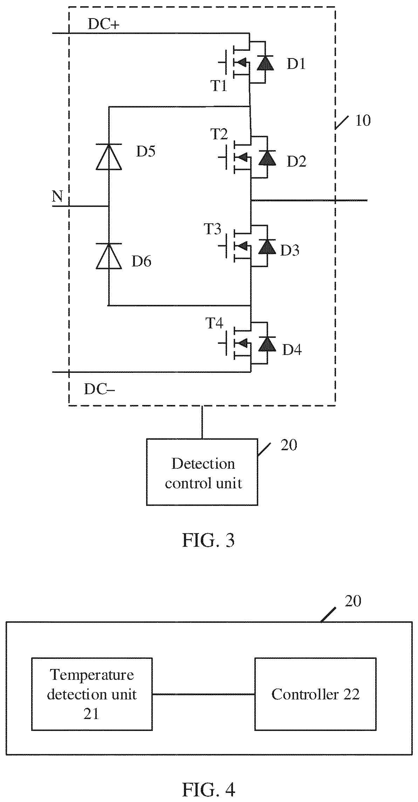

The following describes, with reference to FIG. 3 to FIG. 10, the inverter and the power supply system provided in this application and operating principles of the inverter and the power supply system. In embodiments of this application, "and/or" represents one or all. For example, a first switching tube T1 and/or a fourth switching tube T4 may represent the first switching tube T1 or a fourth switching tube T4, or may represent the first switching tube T1 and a fourth switching tube T4.

FIG. 3 is a schematic diagram of a structure of the inverter according to this application. As shown in FIG. 3, the inverter includes at least one bridge arm 10 and a detection control unit 20. The bridge arm 10 may include a first switching tube T1, a second switching tube T2, a third switching tube T3, a fourth switching tube T4, a neutral point clamping diode D5, and a neutral point clamping diode D6. The first switching tube T1, the second switching tube T2, the third switching tube T3, and the fourth switching tube T4 are connected in series. The neutral point clamping diode D5 and the neutral point clamping diode D6 are connected in series and then respectively connected to a series connection point of the first switching tube T1 and the second switching tube T2 and a series connection point of the third switching tube T3 and the fourth switching tube T4. The bridge arm 10 may further include a freewheeling diode D1, a freewheeling diode D2, a freewheeling diode D3, and a freewheeling diode D4. The freewheeling diode D1 is connected in series to the first switching tube T1. The freewheeling diode D2 is connected in series to the second switching tube T2. The freewheeling diode D3 is connected in series to the third switching tube T3. The freewheeling diode D4 is connected in series to the fourth switching tube T4.

FIG. 4 is a schematic diagram of a structure of the detection control unit 20 according to this application. As shown in FIG. 4, the detection control unit 20 may include a temperature detection unit 21 and a controller 22. The temperature detection unit 21 may include a thermistor or a temperature sensor. The temperature detection unit 21 is coupled to the neutral point clamping diode D5 and the neutral point clamping diode D6, and is configured to detect temperatures of the neutral point clamping diode D5 and the neutral point clamping diode D6. The controller 22 may be separately connected to the temperature detection unit 21, the first switching tube T1, the second switching tube T2, the third switching tube T3, and the fourth switching tube T4. Optionally, the controller 22 is separately connected to the temperature detection unit 21, the first switching tube T1, the second switching tube T2, the third switching tube T3, and the fourth switching tube T4 in a wireless manner. This may be specifically determined based on an actual application scenario, and is not limited herein. The controller 22 is configured to obtain the temperatures of the neutral point clamping diode D5 and the neutral point clamping diode D6 detected by the temperature detection unit 21, and then control turn-off or turn-on of the first switching tube T1, the second switching tube T2, the third switching tube T3, or the fourth switching tube T4 based on the temperatures of the neutral point clamping diode D5 and the neutral point clamping diode D6.

The first switching tube T1, the second switching tube T2, the third switching tube T3, and the fourth switching tube T4 each may be a MOSFET, an IGBT, a controllable power switch device, or a diode that is made of a silicon semiconductor material (silicon, Si), a third-generation wide bandgap semiconductor material silicon carbide (silicon carbide, SiC), gallium nitride (gallium nitride, GaN), diamond (diamond), zinc oxide (zinc oxide, ZnO), or another material.

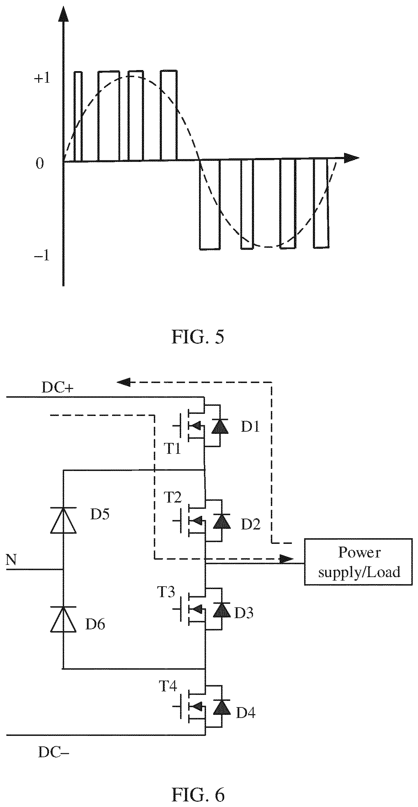

In this embodiment of this application, the inverter is a three-level neutral point clamped (neutral point clamped, NPC) inverter. In normal cases, the three-level neutral point clamped inverter operates in a three-level operating mode. FIG. 5 is a schematic diagram of a pulse width modulated signal in the three-level operating mode according to an embodiment of this application. The detection control unit 20 controls turn-on or turn-off of the first switching tube T1, the second switching tube T2, the third switching tube T3, and the fourth switching tube T4 by using the pulse width modulated signal. In a first half cycle, a level status of the pulse width modulated signal includes "+1" and "0". In a second half cycle, the level status of the pulse width modulated signal includes "0" and "-1". Duration of the level state "+1", the level state "0", and the level state "-1" may be different or the same. For ease of description, a current direction is defined as follows: When a current flows out from an output end of the inverter, the current direction is positive; or when a current flows in from an output end of the inverter, the current direction is negative.

FIG. 6 is a schematic diagram of a current flow direction when the inverter operates at a "+1" level. As shown in FIG. 6, when the level status of the pulse width modulated signal is "+1", the first switching tube T1 and the second switching tube T2 are controlled to be turned on, and the third switching tube T3 and the fourth switching tube T4 are controlled to be turned off. If the current direction is positive, a current path 1 is: a direct current positive electrode DC+, the first switching tube T1, the second switching tube T2, and a power supply/load. If the current direction is negative, a current path 2 is: a power supply/load, the freewheeling diode D2, the freewheeling diode D1, and a direct current positive electrode DC+.

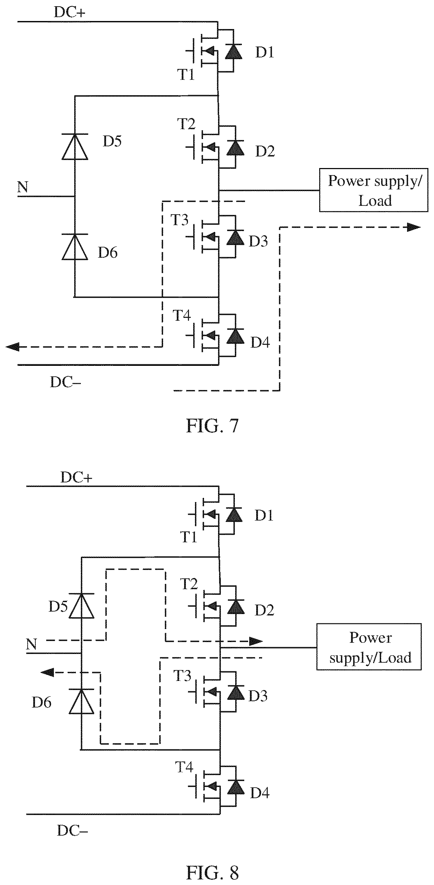

FIG. 7 is a schematic diagram of a current flow direction when the inverter operates at a "-1" level. As shown in FIG. 7, when the level status of the pulse width modulated signal is "-1", the third switching tube T3 and the fourth switching tube T4 are controlled to be turned on, and the first switching tube T1 and the second switching tube T2 are controlled to be turned off. If the current direction is negative, a current path 3 is: a power supply/load, the third switching tube T3, the fourth switching tube T4, and a direct current negative electrode DC-. If the current direction is positive, a current path 4 is: a direct current negative electrode DC-, the freewheeling diode D4, the freewheeling diode D3, and a power supply/load.

FIG. 8 is a schematic diagram of a current flow direction when the inverter operates at a "0" level. As shown in FIG. 8, when the level status of the pulse width modulated signal is "0", the second switching tube T2 and the third switching tube T3 are controlled to be turned on, and the first switching tube T1 and the fourth switching tube T4 are controlled to be turned off. If the current direction is positive, a current path 5 is: a neutral potential point N, the neutral point clamping diode D5, the second switching tube T2, and a power supply/load. If the current direction is negative, a current path 6 is: a power supply/load, the third switching tube T3, the neutral point clamping diode D6, and a neutral potential point N.

It can be seen from FIG. 6 to FIG. 8 that, when the first switching tube T1 and the second switching tube T2 are on and the third switching tube T3 and the fourth switching tube T4 are off, or when the third switching tube T3 and the fourth switching tube T4 are on and the first switching tube T1 and the second switching tube T2 are off, the current does not pass through the neutral point clamping diode D5 and the neutral point clamping diode D6. When the second switching tube T2 and the third switching tube T3 are on, and the first switching tube T1 and the fourth switching tube T4 are off, the neutral point clamping diode D5 and the second switching tube T2 form a current path, and the current flows in from an input end of the inverter, and flows out from the output end of the inverter through the neutral point clamping diode D5 and the second switching tube T2. Alternatively, when the second switching tube T2 and the third switching tube T3 are on, and the first switching tube T1 and the fourth switching tube T4 are off, the third switching tube T3 and the neutral point clamping diode D6 form a current path, and the current flows in from the output end of the inverter, and flows out from an input end of the inverter through the third switching tube T3 and the neutral point clamping diode D6.

In conclusion, when the first switching tube T1 is off and the fourth switching tube T4 is off, the current may pass through a current path between the neutral potential point N and the power supply/load, that is, the current may pass through the neutral point clamping diode D5 and the neutral point clamping diode D6. When the first switching tube T1 is on or the fourth switching tube T4 is on, the current passes through a current path between the direct current positive electrode DC+ and the power supply/load, or a current path between the direct current negative electrode DC- and the power supply/load, but does not pass through a current path between the neutral potential point N and the power supply/load, that is, the current does not pass through the neutral point clamping diode D5 and the neutral point clamping diode D6.

When low voltage ride through occurs, a current at a grid-tied point of the inverter is high. If this state lasts for a long time, the temperatures of the neutral point clamping diode D5 and the neutral point clamping diode D6 are high, and as a result, thermal stress borne by the neutral point clamping diode D5 and the neutral point clamping diode D6 is beyond a safe range. Therefore, in this embodiment of this application, the detection control unit 20 detects the temperatures of the neutral point clamping diode D5 and the neutral point clamping diode D6, and adjusts on-duration of the first switching tube T1 and/or the fourth switching tube T4 in one switching cycle based on the temperatures of the neutral point clamping diode D5 and the neutral point clamping diode D6 to control the current flowing through the neutral point clamping diode D5 and the neutral point clamping diode D6. In this way, it is ensured that the thermal stress borne by the neutral point clamping diode D5 and/or the neutral point clamping diode D6 is within the safe range. This avoids component damage caused by overheating of the neutral point clamping diode D5 and/or the neutral point clamping diode D6, and ensures normal operation of a circuit. A specific implementation is as follows.

The switching cycle may be fixed duration. In one switching cycle, the pulse width modulated signal may include the three level states: "+1", "0", and "-1". That is, in one switching cycle, the following three cases may occur: The first switching tube T1 and the second switching tube T2 are on, and the third switching tube T3 and the fourth switching tube T4 are off. Alternatively, the third switching tube T3 and the fourth switching tube T4 are on, and the first switching tube T1 and the second switching tube T2 are off. Alternatively, the second switching tube T2 and the third switching tube T3 are on, and the first switching tube T1 and the fourth switching tube T4 are off. In one switching cycle, duration of the three level states "+1 ", "0", and "-1" may be different or the same. The on-duration may be duration of an on state of the first switching tube T1 and/or the fourth switching tube T4 in one switching cycle.

In a possible implementation, the detection control unit 20 is configured to control, when the temperatures/temperature of the neutral point clamping diode D5 and/or the neutral point clamping diode D6 exceed/exceeds a first preset threshold, the on-duration of the first switching tube T1 and/or the fourth switching tube T4 in one switching cycle to be first duration. The first duration is greater than a second preset threshold. The second preset threshold may be a maximum value of the on-duration of the first switching tube T1 and/or the fourth switching tube T4 in one switching cycle when the inverter is in a normal operating state. The normal operating state indicates an operating state when the temperatures/temperature of the neutral point clamping diode D5 and/or the neutral point clamping diode D6 in the inverter do/does not exceed the first preset threshold. The on-duration of the first switching tube T1 and/or the fourth switching tube T4 in one switching cycle is increased, so that the current all passes through the current path 1, the current path 2, the current path 3, or the current path 4, but does not pass through the current path 5 or the current path 6, that is, the current does not pass through the neutral point clamping diode D5 and/or the neutral point clamping diode D6.

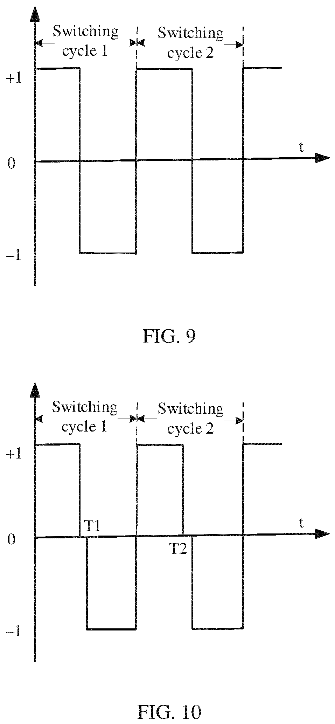

For example, FIG. 9 is a schematic diagram of the pulse width modulated signal in a two-level operating mode according to an embodiment of this application. When the neutral point clamping diode D5 and/or the neutral point clamping diode D6 exceed/exceeds the first preset threshold, duration of the level state "+1" or the level state "-1" of the pulse width modulated signal in one switching cycle is increased, so that duration of the level state "0" of the pulse width modulated signal is 0. As shown in FIG. 9, in a switching cycle 1, the level status of the pulse width modulated signal includes only the level state "+1" and the level state "-1". In a switching cycle 2, the level status of the pulse width modulated signal also includes only the level state "+1" and the level state "-1". Duration of the level state "0" is 0 in both the switching cycle 1 and the switching cycle 2. That is, in one switching cycle, only a case in which the first switching tube T1 and the second switching tube T2 are on and the third switching tube T3 and the fourth switching tube T4 are off, and/or a case in which the third switching tube T3 and the fourth switching tube T4 are on and the first switching tube T1 and the second switching tube T2 are off occur/occurs, but a case in which the second switching tube T2 and the third switching tube T3 are on and the first switching tube T1 and the fourth switching tube T4 are off does not occur. In this case, the current does not pass through the neutral point clamping diode D5 and/or the neutral point clamping diode D6.

The three-level operating mode is modulated to the two-level operating mode to control duration in which the first switching tube T1 and the fourth switching tube T4 are off and the second switching tube T2 and the third switching tube T3 are on in one switching cycle to be 0, so that the current does not pass through the neutral point clamping diode D5 and/or the neutral point clamping diode D6. In this way, the temperatures of the neutral point clamping diode D5 and/or the neutral point clamping diode D6 are reduced to ensure that the thermal stress borne by the neutral point clamping diode D5 and/or the neutral point clamping diode D6 is within the safe range. This avoids component damage caused by overheating of the neutral point clamping diode D5 and/or the neutral point clamping diode D6, and ensures normal operation of the circuit.

In a possible implementation, the detection control unit 20 is configured to control, when the temperatures/temperature of the neutral point clamping diode D5 and/or the neutral point clamping diode D6 exceed/exceeds the first preset threshold, the on-duration of the first switching tube T1 and/or the fourth switching tube T4 in one switching cycle to be the first duration. The first duration is greater than the second preset threshold. The second preset threshold may be the maximum value of the on-duration of the first switching tube T1 and/or the fourth switching tube T4 in one switching cycle when the inverter is in the normal operating state. The normal operating state indicates an operating state when the temperatures/temperature of the neutral point clamping diode D5 and/or the neutral point clamping diode D6 in the inverter do/does not exceed the first preset threshold. The on-duration of the first switching tube T1 and/or the fourth switching tube T4 in one switching cycle is increased, so that the current passes through the current path 1, the current path 2, the current path 3, or the current path 4 for as long as possible, and passes through the current path 5 or the current path 6 for as short as possible. In this way, the current passing through the neutral point clamping diode D5 and/or the neutral point clamping diode D6 is reduced.

For example, FIG. 10 is a schematic diagram of another pulse width modulated signal in the three-level operating mode according to an embodiment of this application. When the temperatures/temperature of the neutral point clamping diode D5 and/or the neutral point clamping diode D6 exceed/exceeds the first preset threshold, duration of a level state "+1" or a level state "-1" of the pulse width modulated signal in one switching cycle is increased, so that duration of a level state "0" is reduced, and the duration of the level state "0" in one switching cycle is less than preset duration. As shown in FIG. 10, in a switching cycle 1, the pulse width modulated signal includes the three level states: "+1", "0", and "-1", and duration of the level state "0" is T1. In a switching cycle 2, the pulse width modulated signal includes the three level states: "+1", "0", and "-1", and duration of the level state "0" is T2. T1 and T2 are controlled within a very short time range, so that duration in which the second switching tube T2 and the third switching tube T3 are on and the first switching tube T1 and the fourth switching tube T4 are off is less than the preset duration. Therefore, the current passing through the neutral point clamping diode D5 and/or the neutral point clamping diode D6 is reduced.

The duration of the level state "+1" or "-1" of the pulse width modulated signal in one switching cycle is increased to reduce the duration of the level state "0" in one switching cycle. In this way, the duration in which the first switching tube T1 and the fourth switching tube T4 are off and the second switching tube T2 and the third switching tube T3 are on in one switching cycle is reduced, so that the current passing through the neutral point clamping diode D5 and/or the neutral point clamping diode D6 is reduced. This avoids overtemperature caused by excessively long time when the current flows through the neutral point clamping diode D5 and/or the neutral point clamping diode D6, and ensures that the thermal stress borne by the neutral point clamping diode D5 and/or the neutral point clamping diode D6 is within the safe range, thereby ensuring normal operation of the circuit.

In a possible implementation, the detection control unit 20 is configured to control, when the temperatures of the two neutral point clamping diodes do not exceed the first preset threshold, the on-duration of the first switching tube T1 and/or the fourth switching tube T4 in one switching cycle to be second duration. The second duration is within a preset threshold interval. The preset threshold interval is a time range in which the first switching tube T1 and/or the fourth switching tube T4 are/is in an on state in one switching cycle when the inverter is in the normal operating state. The normal operating state indicates an operating state when the temperatures/temperature of the neutral point clamping diode D5 and/or the neutral point clamping diode D6 in the inverter do/does not exceed the first preset threshold.

When the temperatures/temperature of the neutral point clamping diode D5 and/or the neutral point clamping diode D6 do/does not exceed the first preset threshold, the duration of the level states "+1", "-1", and "0" of the pulse width modulated signal may be restored to the time range in the normal operating state, so that the on-duration of the first switching tube T1 and/or the fourth switching tube T4 is restored to the time range in the normal operating state. Therefore, the current passing through the neutral point clamping diode D5 and/or the neutral point clamping diode D6 is dynamically adjusted based on the temperatures/temperature of the neutral point clamping diode D5 and/or the neutral point clamping diode D6. This not only ensures that the thermal stress borne by the two neutral point clamping diodes is within the safe range, but also ensures normal operation of the inverter.

In a possible implementation, the detection control unit 20 may detect the temperatures/temperature of the neutral point clamping diode D5 and/or the neutral point clamping diode D6 in real time, and adjust the on-duration of the first switching tube T1 and/or the fourth switching tube T4 in one switching cycle based on the temperatures/temperature of the neutral point clamping diode D5 and/or the neutral point clamping diode D6 detected in real time to control the current flowing through the neutral point clamping diode D5 and/or the neutral point clamping diode D6. That is, in any case, the temperatures/temperature of the neutral point clamping diode D5 and/or the neutral point clamping diode D6 are/is detected in real time to ensure that the thermal stress borne by the neutral point clamping diode D5 and/or the neutral point clamping diode D6 is within the safe range.

In a possible implementation, when low voltage ride through occurs, a voltage at a grid-tied point of the inverter is less than a third preset threshold, or a current at a grid-tied point of the inverter is greater than a fourth preset threshold. The temperatures/temperature of the neutral point clamping diode D5 and/or the neutral point clamping diode D6 may exceed the safe range only when the low voltage ride through occurs. The detection control unit 20 is configured to start to detect, when it is detected that the voltage at the grid-tied point of the inverter is less than the third preset threshold or the current at the grid-tied point of the inverter is greater than the fourth preset threshold, the temperatures/temperature of the neutral point clamping diode D5 and/or the neutral point clamping diode D6. When it is detected that the voltage at the grid-tied point of the inverter is not less than the third preset threshold and the current at the grid-tied point of the inverter is not greater than the fourth preset threshold, detection of the temperatures/temperature of the neutral point clamping diode D5 and/or the neutral point clamping diode D6 may be stopped. The circuit is not detected when the low voltage ride through does not occur. Therefore, operating efficiency of the circuit is ensured.

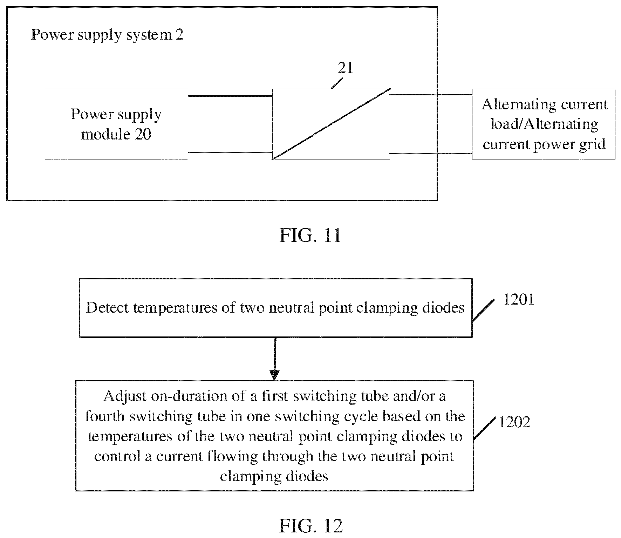

FIG. 11 is a schematic diagram of a structure of a power supply system according to this application. As shown in FIG. 11, the power supply system 2 includes a power supply module 20 and an inverter 21 (for example, the inverter shown in FIG. 3 to FIG. 10). An output end of the inverter 21 may be connected to an alternating current load or an alternating current power grid. In a pure energy storage power supply application scenario, the power supply module 20 may include a plurality of battery packs connected in series and in parallel. One battery pack may include one or more battery units (a voltage of the battery unit usually ranges from 2.5 V to 4.2 V) connected in series and parallel, to form a minimum energy storage and management unit. Optionally, the power supply module may further be a power generation component. The power generation component may include but is not limited to a solar power generation component, a wind power generation component, a hydrogen power generation component, and a diesel power generation component. In a hybrid photovoltaic energy storage power supply scenario, the power supply module 20 is a photovoltaic array. The photovoltaic array may include a plurality of photovoltaic strings connected in series and in parallel. One photovoltaic string may include a plurality of photovoltaic modules (which may also be referred to as solar panels or photovoltaic panels). The inverter 21 may convert a direct current output by the power supply module 20 into an alternating current for use by the alternating current power grid and/or the alternating current load. In the inverter 21, a detection control unit may detect temperatures of a neutral point clamping diode D5 and a neutral point clamping diode D6 in each bridge arm in the inverter, and adjust on-duration of a first switching tube T1 and/or a fourth switching tube T4 in one switching cycle based on the temperatures of the neutral point clamping diode D5 and the neutral point clamping diode D6 to control a current flowing through the neutral point clamping diode D5 and the neutral point clamping diode D6. This avoids component damage caused by overheating of the neutral point clamping diode D5 and/or the neutral point clamping diode D6, and ensures normal operation of a circuit.

FIG. 12 is a schematic flowchart of a control method for an inverter according to this application. The method is applicable to a detection control unit in the inverter (FIG. 3 to FIG. 10). The inverter further includes a first switching tube, a second switching tube, a third switching tube, a fourth switching tube, and two neutral point clamping diodes. The first switching tube, the second switching tube, the third switching tube, and the fourth switching tube are connected in series. The two neutral point clamping diodes are connected in series and then respectively connected to a series connection point of the first switching tube and the second switching tube and a series connection point of the third switching tube and the fourth switching tube. When the first switching tube and the fourth switching tube are off, and the second switching tube and the third switching tube are on, the two neutral point clamping diodes, the second switching tube, and the third switching tube form a current path. The method includes at least the following steps.

S1201: Detect temperatures of the two neutral point clamping diodes.

In a possible implementation, the temperatures of the two neutral point clamping diodes may be detected in real time through the detection control unit. That is, the temperatures of the two neutral point clamping diodes may be detected in any case.

In a possible implementation, when low voltage ride through occurs, a voltage at a grid-tied point of the inverter is less than a third preset threshold, or a current at a grid-tied point of the inverter is greater than a fourth preset threshold. The temperatures of the two neutral point clamping diodes may exceed a safe range only when the low voltage ride through occurs. When it is detected that the voltage at the grid-tied point of the inverter is less than the third preset threshold or the current at the grid-tied point of the inverter is greater than the fourth preset threshold, the temperatures of the two neutral point clamping diodes start to be detected. When it is detected that the voltage at the grid-tied point of the inverter is not less than the third preset threshold and the current at the grid-tied point of the inverter is not greater than the fourth preset threshold, detection of the temperatures of the two neutral point clamping diodes may be stopped. That is, a circuit is not detected when the low voltage ride through does not occur. Therefore, operating efficiency of the circuit is ensured.

S1202: Adjust on-duration of the first switching tube and/or the fourth switching tube in one switching cycle based on the temperatures of the two neutral point clamping diodes to control a current flowing through the two neutral point clamping diodes.

The switching cycle may be fixed duration. In one switching cycle, a pulse width modulated signal may include three level states: "+1", "0", and "-1". That is, in one switching cycle, the following three cases may occur: The first switching tube and the second switching tube are on, and the third switching tube and the fourth switching tube are off. Alternatively, the third switching tube and the fourth switching tube are on, and the first switching tube and the second switching tube are off. Alternatively, the second switching tube and the third switching tube are on, and the first switching tube and the fourth switching tube are off. In one switching cycle, duration of the three level states "+1", "0", and "-1" may be different or the same. The on-duration may be duration of an on state of the first switching tube and/or the fourth switching tube in one switching cycle.

In a possible implementation, when the temperatures of the two neutral point clamping diodes exceed a first preset threshold, the on-duration of the first switching tube and/or the fourth switching tube in one switching cycle is controlled to be first duration. The first duration is greater than a second preset threshold. The second preset threshold may be a maximum value of the on-duration of the first switching tube and/or the fourth switching tube in one switching cycle when the inverter is in a normal operating state. The normal operating state indicates an operating state when the temperatures of the two neutral point clamping diodes in the inverter do not exceed the first preset threshold. The on-duration of the first switching tube and/or the fourth switching tube is increased, so that duration in which the first switching tube and the fourth switching tube are off and the second switching tube and the third switching tube are on in one switching cycle is controlled to be 0, and the current does not pass through the two neutral point clamping diodes. In this way, the temperatures of the two neutral point clamping diodes are reduced to ensure that thermal stress borne by the two neutral point clamping diodes is within a safe range.

In a possible implementation, when the temperatures of the two neutral point clamping diodes exceed the first preset threshold, the on-duration of the first switching tube and/or the fourth switching tube in one switching cycle is controlled to be the first duration. The first duration is greater than the second preset threshold. The second preset threshold may be the maximum value of the on-duration of the first switching tube and/or the fourth switching tube in one switching cycle when the inverter is in the normal operating state. The on-duration of the first switching tube and/or the fourth switching tube is increased to reduce the duration in which the first switching tube and the fourth switching tube are off and the second switching tube and the third switching tube are on in one switching cycle, thereby reducing the current passing through the two neutral point clamping diodes. This avoids overtemperature caused by excessively long time when the current passes through the two neutral point clamping diodes, and ensures that the thermal stress borne by the two neutral point clamping diodes is within the safe range.

In a possible implementation, when the temperatures of the two neutral point clamping diodes do not exceed the first preset threshold, the on-duration of the first switching tube and/or the fourth switching tube in one switching cycle is controlled to be second duration. The second duration is within a preset threshold interval. The preset threshold interval is a time range in which the first switching tube and/or the fourth switching tube are/is in an on state in one switching cycle when the inverter is in the normal operating state. The normal operating state indicates an operating state when the temperatures of the two neutral point clamping diodes in the inverter do not exceed the first preset threshold. That is, when the temperatures of the two neutral point clamping diodes do not exceed the first preset threshold, the on-duration of the first switching tube and/or the fourth switching tube is restored to the time range in the normal operating state. Therefore, the current passing through the two neutral point clamping diodes is dynamically adjusted based on the temperatures of the two neutral point clamping diodes. This not only ensures that thermal stress borne by the two neutral point clamping diodes is within a safe range, but also ensures normal operation of the inverter.

In a specific implementation, for more operations performed by the detection control unit in the control method for the inverter provided in this application, refer to the inverter shown in FIG. 2 to FIG. 10 and implementations performed by the detection control unit in an operating principle of the inverter. Details are not described herein again.

In this embodiment of this application, the detection control unit detects the temperatures of the two neutral point clamping diodes, and adjusts the on-duration of the first switching tube and/or the fourth switching tube in one switching cycle based on the temperatures of the two neutral point clamping diodes to control the current flowing through the two neutral point clamping diodes. In this way, it is ensured that the thermal stress borne by the two neutral point clamping diodes is within the safe range. This avoids component damage caused by overheating of the two neutral point clamping diodes, and ensures normal operation of the circuit. In addition, because there is no need to select a component of a large specification or limit an output capability, costs may be reduced, and reactive power support may be provided while a power generation capability is ensured.

## Claims

1. An inverter, wherein the inverter comprises a detection control unit (20), a first switching tube (T1), a second switching tube (T2), a third switching tube (T3), a fourth switching tube (T4), and two neutral point clamping diodes (D5, D6); the first switching tube, the second switching tube, the third switching tube, and the fourth switching tube are connected in series; the two neutral point clamping diodes are connected in series, and then are respectively connected to a series connection point of the first switching tube and the second switching tube and a series connection point of the third switching tube and the fourth switching tube; when the first switching tube and the fourth switching tube are off, the two neutral point clamping diodes, the second switching tube, and the third switching tube form a current path; and
**characterized in that** the detection control unit is coupled to the two neutral point clamping diodes, and is configured to detect temperatures of the two neutral point clamping diodes, and increase, when the temperatures of the two neutral point clamping diodes exceed the first preset threshold, the on-duration of the first switching tube and/or the fourth switching tube in one switching cycle to be a first duration to reduce the current flowing through the two neutral point clamping diodes, wherein the first duration is greater than a second preset threshold, and the second preset threshold is a maximum value of the on-duration of the first switching tube and/or the fourth switching tube in one switching cycle when the inverter is in a normal operating state.

2. The inverter according to claim 1, wherein the detection control unit is further configured to control, when the temperatures of the two neutral point clamping diodes do not exceed a first preset threshold, the on-duration of the first switching tube and/or the fourth switching tube in one switching cycle to be second duration, wherein the second duration is within a preset threshold interval, and the preset threshold interval is a time range in which the first switching tube and/or the fourth switching tube are/is in an on state in one switching cycle when the inverter is in a normal operating state.

3. The inverter according to claim 1, wherein the detection control unit is further configured to control, when the temperatures of the two neutral point clamping diodes do not exceed the first preset threshold, the on-duration of the first switching tube and/or the fourth switching tube in one switching cycle to be second duration, wherein the second duration is within a preset threshold interval, and the preset threshold interval is a time range in which the first switching tube and/or the fourth switching tube are/is in an on state in one switching cycle when the inverter is in the normal operating state.

4. The inverter according to any one of claims 1 to 3, wherein the detection control unit is further configured to start to detect, when it is detected that a voltage at a grid-tied point of the inverter is less than a third preset threshold or a current at a grid-tied point of the inverter is greater than a fourth preset threshold, the temperatures of the two neutral point clamping diodes.

5. The inverter according to any one of claims 1 to 4, wherein the inverter is a three-level neutral point clamped inverter.

6. A control method for an inverter, wherein the method is applicable to a detection control unit in the inverter; the inverter further comprises a first switching tube, a second switching tube, a third switching tube, a fourth switching tube, and two neutral point clamping diodes; the first switching tube, the second switching tube, the third switching tube, and the fourth switching tube are connected in series; the two neutral point clamping diodes are connected in series, and then are respectively connected to a series connection point of the first switching tube and the second switching tube and a series connection point of the third switching tube and the fourth switching tube; when the first switching tube and the fourth switching tube are off, the two neutral point clamping diodes, the second switching tube, and the third switching tube form a current path; and the method comprises:
detecting temperatures of the two neutral point clamping diodes; and
increasing, when the temperatures of the two neutral point clamping diodes exceed a first preset threshold, the on-duration of the first switching tube and/or the fourth switching tube in one switching cycle to reduce the current flowing through the two neutral point clamping diodes, **characterized in that** the increasing, when the temperatures of the two neutral point clamping diodes exceed a first preset threshold, the on-duration of the first switching tube and/or the fourth switching tube in one switching cycle comprises:
controlling, when the temperatures of the two neutral point clamping diodes exceed the first preset threshold, the on-duration of the first switching tube and/or the fourth switching tube in one switching cycle to be a first duration, wherein the first duration is greater than a second preset threshold, and the second preset threshold is a maximum value of the on-duration of the first switching tube and/or the fourth switching tube in one switching cycle when the inverter is in a normal operating state.

7. The method according to claim 6, wherein the adjusting on-duration of the first switching tube and/or the fourth switching tube in one switching cycle based on the temperatures of the two neutral point clamping diodes to control a current flowing through the two neutral point clamping diodes comprises:
controlling, when the temperatures of the two neutral point clamping diodes do not exceed a first preset threshold, the on-duration of the first switching tube and/or the fourth switching tube in one switching cycle to be second duration, wherein the second duration is within a preset threshold interval, and the preset threshold interval is a time range in which the first switching tube and/or the fourth switching tube are/is in an on state in one switching cycle when the inverter is in a normal operating state.

8. The method according to clais 6, wherein the adjusting on-duration of the first switching tube and/or the fourth switching tube in one switching cycle based on the temperatures of the two neutral point clamping diodes to control a current flowing through the two neutral point clamping diodes comprises:
controlling, when the temperatures of the two neutral point clamping diodes do not exceed a first preset threshold, the on-duration of the first switching tube and/or the fourth switching tube in one switching cycle to be second duration, wherein the second duration is within a preset threshold interval, and the preset threshold interval is a time range in which the first switching tube and/or the fourth switching tube are/is in an on state in one switching cycle when the inverter is in a normal operating state.

9. The method according to any one of claims 6 to 8, wherein the detecting temperatures of the two neutral point clamping diodes comprises:
starting to detect, when it is detected that a voltage at a grid-tied point of the inverter is less than a third preset threshold or a current at a grid-tied point of the inverter is greater than a fourth preset threshold, the temperatures of the two neutral point clamping diodes.

10. A power supply system (2), wherein the power supply system comprises a photovoltaic array and the inverter according to claims 1 to 5 that is connected to the photovoltaic array, and the photovoltaic array is configured to send electric energy obtained through conversion to the inverter for inversion processing.

## Patentansprüche

1. Wechselrichter, wobei der Wechselrichter eine Erkennungssteuereinheit (20), eine erste Schaltröhre (T1), eine zweite Schaltröhre (T2), eine dritte Schaltröhre (T3), eine vierte Schaltröhre (T4) und zwei Neutralpunkt-Klemmdioden (D5, D6) umfasst; die erste Schaltröhre, die zweite Schaltröhre, die dritte Schaltröhre und die vierte Schaltröhre in Reihe geschaltet sind; die zwei Neutralpunkt-Klemmdioden in Reihe geschaltet sind und dann jeweils mit einem Reihenverbindungspunkt der ersten Schaltröhre und der zweiten Schaltröhre und einem Reihenverbindungspunkt der dritten Schaltröhre und der vierten Schaltröhre verbunden sind; wenn die erste Schaltröhre und die vierte Schaltröhre ausgeschaltet sind, die zwei Neutralpunkt-Klemmdioden, die zweite Schaltröhre und die dritte Schaltröhre einen Strompfad bilden; und
**dadurch gekennzeichnet, dass** die Erkennungssteuereinheit mit den zwei Neutralpunkt-Klemmdioden gekoppelt ist und dazu konfiguriert ist, Temperaturen der zwei Neutralpunkt-Klemmdioden zu erkennen und, wenn die Temperaturen der zwei Neutralpunkt-Klemmdioden den ersten voreingestellten Schwellenwert überschreiten, die Einschaltdauer der ersten Schaltröhre und/oder der vierten Schaltröhre in einem Schaltzyklus auf eine erste Dauer zu erhöhen, um den Strom, der durch die zwei Neutralpunkt-Klemmdioden fließt, zu verringern, wobei die erste Dauer größer ist als ein zweiter voreingestellter Schwellenwert und der zweite voreingestellte Schwellenwert ein Maximalwert der Einschaltdauer der ersten Schaltröhre und/oder der vierten Schaltröhre in einem Schaltzyklus ist, wenn sich der Wechselrichter in einem normalen Betriebszustand befindet.

2. Wechselrichter nach Anspruch 1, wobei die Erkennungssteuereinheit ferner dazu konfiguriert ist, wenn die Temperaturen der zwei Neutralpunkt-Klemmdioden einen ersten voreingestellten Schwellenwert nicht überschreiten, die Einschaltdauer der ersten Schaltröhre und/oder der vierten Schaltröhre in einem Schaltzyklus zu steuern, eine zweite Dauer zu sein, wobei die zweite Dauer innerhalb eines voreingestellten Schwellenwertintervalls liegt und das voreingestellte Schwellenwertintervall ein Zeitbereich ist, in dem die erste Schaltröhre und/oder die vierte Schaltröhre sich in einem Schaltzyklus in einem eingeschalteten Zustand befindet/befinden, wenn sich der Wechselrichter in einem normalen Betriebszustand befindet.

3. Wechselrichter nach Anspruch 1, wobei die Erkennungssteuereinheit ferner dazu konfiguriert ist, wenn die Temperaturen der zwei Neutralpunkt-Klemmdioden den ersten voreingestellten Schwellenwert nicht überschreiten, die Einschaltdauer der ersten Schaltröhre und/oder der vierten Schaltröhre in einem Schaltzyklus auf eine zweite Dauer zu steuern, wobei die zweite Dauer innerhalb eines voreingestellten Schwellenwertintervalls liegt und das voreingestellte Schwellenwertintervall ein Zeitbereich ist, in dem die erste Schaltröhre und/oder die vierte Schaltröhre sich in einem eingeschalteten Zustand in einem Schaltzyklus befindet/befinden, wenn sich der Wechselrichter in dem normalen Betriebszustand befindet.

4. Wechselrichter nach einem der Ansprüche 1 bis 3, wobei die Erkennungssteuereinheit ferner dazu konfiguriert ist, die Temperaturen der zwei Neutralpunkt-Klemmdioden zu erkennen zu beginnen, wenn erkannt wird, dass eine Spannung an einem netzgekoppelten Punkt des Wechselrichters kleiner als ein dritter voreingestellter Schwellenwert ist oder ein Strom an einem netzgekoppelten Punkt des Wechselrichters größer als ein vierter voreingestellter Schwellenwert ist.

5. Wechselrichter nach einem der Ansprüche 1 bis 4, wobei der Wechselrichter ein dreistufiger Dreipunktwechselrichter ist.

6. Steuerungsverfahren für einen Wechselrichter, wobei das Verfahren auf eine Erkennungssteuereinheit in dem Wechselrichter anwendbar ist; der Wechselrichter ferner eine erste Schaltröhre, eine zweite Schaltröhre, eine dritte Schaltröhre, eine vierte Schaltröhre und zwei Neutralpunkt-Klemmdioden umfasst; die erste Schaltröhre, die zweite Schaltröhre, die dritte Schaltröhre und die vierte Schaltröhre in Reihe geschaltet sind; die zwei Neutralpunkt-Klemmdioden in Reihe geschaltet sind und dann jeweils mit einem Reihenverbindungspunkt der ersten Schaltröhre und der zweiten Schaltröhre und einem Reihenverbindungspunkt der dritten Schaltröhre und der vierten Schaltröhre verbunden sind; wenn die erste Schaltröhre und die vierte Schaltröhre ausgeschaltet sind, die zwei Neutralpunkt-Klemmdioden, die zweite Schaltröhre und die dritte Schaltröhre einen Strompfad bilden; und das Verfahren Folgendes umfasst:
Erkennen von Temperaturen der zwei Neutralpunkt-Klemmdioden; und
Erhöhen, wenn die Temperaturen der zwei Neutralpunkt-Klemmdioden einen ersten voreingestellten Schwellenwert überschreiten, der Einschaltdauer der ersten Schaltröhre und/oder der vierten Schaltröhre in einem Schaltzyklus, um den Strom, der durch die zwei Neutralpunkt-Klemmdioden fließt, zu verringern, **dadurch gekennzeichnet, dass** das Erhöhen, wenn die Temperaturen der zwei Neutralpunkt-Klemmdioden einen ersten voreingestellten Schwellenwert überschreiten, der Einschaltdauer der ersten Schaltröhre und/oder der vierten Schaltröhre in einem Schaltzyklus Folgendes umfasst:
Steuern, wenn die Temperaturen der zwei Neutralpunkt-Klemmdioden den ersten voreingestellten Schwellenwert überschreiten, der Einschaltdauer der ersten Schaltröhre und/oder der vierten Schaltröhre in einem Schaltzyklus auf eine zweite Dauer, wobei die erste Dauer größer als ein zweiter voreingestellter Schwellenwert ist und der zweite voreingestellte Schwellenwert ein Maximalwert der Einschaltdauer der ersten Schaltröhre und/oder der vierten Schaltröhre in einem Schaltzyklus ist, wenn sich der Wechselrichter in einem normalen Betriebszustand befindet.

7. Verfahren nach Anspruch 6, wobei das Anpassen der Einschaltdauer der ersten Schaltröhre und/oder der vierten Schaltröhre in einem Schaltzyklus basierend auf den Temperaturen der zwei Neutralpunkt-Klemmdioden, um einen Strom zu steuern, der durch die zwei Neutralpunkt-Klemmdioden fließt, Folgendes umfasst:
Steuern, wenn die Temperaturen der zwei Neutralpunkt-Klemmdioden einen ersten voreingestellten Schwellenwert nicht überschreiten, der Einschaltdauer der ersten Schaltröhre und/oder der vierten Schaltröhre in einem Schaltzyklus auf eine zweite Dauer, wobei die zweite Dauer innerhalb eines voreingestellten Schwellenwertintervalls liegt und das voreingestellte Schwellenwertintervall ein Zeitbereich ist, in dem die erste Schaltröhre und/oder die vierte Schaltröhre sich in einem eingeschalteten Zustand in einem Schaltzyklus befindet/befinden, wenn sich der Wechselrichter in einem normalen Betriebszustand befindet.

8. Verfahren nach Anspruch 6, wobei das Anpassen der Einschaltdauer der ersten Schaltröhre und/oder der vierten Schaltröhre in einem Schaltzyklus basierend auf den Temperaturen der zwei Neutralpunkt-Klemmdioden, um einen Strom zu steuern, der durch die zwei Neutralpunkt-Klemmdioden fließt, Folgendes umfasst:
Steuern, wenn die Temperaturen der zwei Neutralpunkt-Klemmdioden einen ersten voreingestellten Schwellenwert nicht überschreiten, der Einschaltdauer der ersten Schaltröhre und/oder der vierten Schaltröhre in einem Schaltzyklus auf eine zweite Dauer, wobei die zweite Dauer innerhalb eines voreingestellten Schwellenwertintervalls liegt und das voreingestellte Schwellenwertintervall ein Zeitbereich ist, in dem die erste Schaltröhre und/oder die vierte Schaltröhre sich in einem eingeschalteten Zustand in einem Schaltzyklus befindet/befinden, wenn sich der Wechselrichter in einem normalen Betriebszustand befindet.

9. Verfahren nach einem der Ansprüche 6 bis 8, wobei das Erkennen von Temperaturen der zwei Neutralpunkt-Klemmdioden Folgendes umfasst:
Beginnen mit dem Erkennen, wenn erkannt wird, dass eine Spannung an einem netzgekoppelten Punkt des Wechselrichters kleiner als ein dritter voreingestellter Schwellenwert ist oder ein Strom an einem netzgekoppelten Punkt des Wechselrichters größer als ein vierter voreingestellter Schwellenwert ist, der Temperaturen der zwei Neutralpunkt-Klemmdioden.

10. Stromversorgungssystem (2), wobei das Stromversorgungssystem eine Photovoltaikanlage und den Wechselrichter nach den Ansprüchen 1 bis 5, der mit der Photovoltaikanlage verbunden ist, umfasst und die Photovoltaikanlage dazu konfiguriert ist, elektrische Energie, die durch Konvertierung erlangt wird, an den Wechselrichter zur Invertierungsverarbeitung zu schicken.

## Revendications

1. Onduleur, dans lequel l'onduleur comprend une unité de commande de détection (20), un premier tube de commutation (T1), un deuxième tube de commutation (T2), un troisième tube de commutation (T3), un quatrième tube de commutation (T4) et deux diodes de blocage de point neutre (D5, D6) ; le premier tube de commutation, le deuxième tube de commutation, le troisième tube de commutation, et le quatrième tube de commutation sont connectés en série ; les deux diodes de blocage de point neutre sont connectées en série, puis sont respectivement connectées à un point de connexion en série du premier tube de commutation et du deuxième tube de commutation et à un point de connexion en série du troisième tube de commutation et du quatrième tube de commutation ; lorsque le premier tube de commutation et le quatrième tube de commutation sont éteints, les deux diodes de blocage de point neutre, le deuxième tube de commutation, et le troisième tube de commutation forment un chemin de courant ; et **caractérisé en ce que** l'unité de commande de détection est couplée aux deux diodes de blocage de point neutre, et est configurée pour détecter des températures des deux diodes de blocage de point neutre, et augmenter, lorsque les températures des deux diodes de blocage de point neutre dépassent le premier seuil prédéfini, la durée d'activation du premier tube de commutation et/ou du quatrième tube de commutation dans un cycle de commutation pour qu'elle soit une première durée pour réduire le courant circulant à travers les deux diodes de blocage de point neutre, dans lequel la première durée est supérieure à un deuxième seuil prédéfini, et le deuxième seuil prédéfini est une valeur maximale de la durée d'activation du premier tube de commutation et/ou du quatrième tube de commutation dans un cycle de commutation lorsque l'onduleur est dans un état de fonctionnement normal.

2. Onduleur selon la revendication 1, dans lequel l'unité de commande de détection est également configurée pour commander, lorsque les températures des deux diodes de blocage de point neutre ne dépassent pas un premier seuil prédéfini, la durée d'activation du premier tube de commutation et/ou du quatrième tube de commutation dans un cycle de commutation pour qu'elle soit une seconde durée, dans lequel la seconde durée est comprise dans un intervalle de seuil prédéfini, et l'intervalle de seuil prédéfini est une plage de temps dans laquelle le premier tube de commutation et/ou le quatrième tube de commutation sont dans un état activé dans un cycle de commutation lorsque l'onduleur est dans un état de fonctionnement normal.

3. Onduleur selon la revendication 1, dans lequel l'unité de commande de détection est également configurée pour commander, lorsque les températures des deux diodes de blocage de point neutre ne dépassent pas le premier seuil prédéfini, la durée d'activation du premier tube de commutation et/ou du quatrième tube de commutation dans un cycle de commutation pour qu'elle soit une seconde durée, dans lequel la seconde durée est comprise dans un intervalle de seuil prédéfini, et l'intervalle de seuil prédéfini est une plage de temps dans laquelle le premier tube de commutation et/ou le quatrième tube de commutation sont dans un état activé dans un cycle de commutation lorsque l'onduleur est dans l'état de fonctionnement normal.

4. Onduleur selon l'une quelconque des revendications 1 à 3, dans lequel l'unité de commande de détection est également configurée pour commencer à détecter, lorsqu'il est détecté qu'une tension à un point raccordé au réseau de l'onduleur est inférieure à un troisième seuil prédéfini ou qu'un courant à un point raccordé au réseau de l'onduleur est supérieur à un quatrième seuil prédéfini, les températures des deux diodes de blocage de point neutre.

5. Onduleur selon l'une quelconque des revendications 1 à 4, dans lequel l'onduleur est un onduleur à blocage à point neutre à trois niveaux.

6. Procédé de commande d'un onduleur, dans lequel le procédé est applicable à une unité de commande de détection dans l'onduleur ; l'onduleur comprend également un premier tube de commutation, un deuxième tube de commutation, un troisième tube de commutation, un quatrième tube de commutation, et deux diodes de blocage de point neutre ; le premier tube de commutation, le deuxième tube de commutation, le troisième tube de commutation, et le quatrième tube de commutation sont connectés en série ; les deux diodes de blocage de point neutre sont connectées en série, puis sont respectivement connectées à un point de connexion en série du premier tube de commutation et du deuxième tube de commutation et à un point de connexion en série du troisième tube de commutation et du quatrième tube de commutation ; lorsque le premier tube de commutation et le quatrième tube de commutation sont éteints, les deux diodes de blocage de point neutre, le deuxième tube de commutation, et le troisième tube de commutation forment un chemin de courant ; et le procédé comprend :
la détection de températures des deux diodes de blocage de point neutre ; et
l'augmentation, lorsque les températures des deux diodes de blocage de point neutre dépassent un premier seuil prédéfini, de la durée d'activation du premier tube de commutation et/ou du quatrième tube de commutation au cours d'un cycle de commutation afin de réduire le courant traversant les deux diodes de blocage de point neutre, **caractérisé en ce que** l'augmentation, lorsque les températures des deux diodes de blocage de point neutre dépassent un premier seuil prédéfini, de la durée d'activation du premier tube de commutation et/ou du quatrième tube de commutation au cours d'un cycle de commutation comprend :
la commande, lorsque les températures des deux diodes de blocage de point neutre dépassent le premier seuil prédéfini, de la durée d'activation du premier tube de commutation et/ou du quatrième tube de commutation dans un cycle de commutation pour qu'elle soit une première durée, dans lequel la première durée est supérieure à un deuxième seuil prédéfini, et le deuxième seuil prédéfini est une valeur maximale de la durée d'activation du premier tube de commutation et/ou du quatrième tube de commutation dans un cycle de commutation lorsque l'onduleur est dans un état de fonctionnement normal.

7. Procédé selon la revendication 6, dans lequel le réglage de la durée d'activation du premier tube de commutation et/ou du quatrième tube de commutation au cours d'un cycle de commutation sur la base des températures des deux diodes de blocage de point neutre pour commander un courant traversant les deux diodes de bocage de point neutre comprend :
la commande, lorsque les températures des deux diodes de blocage de point neutre ne dépassent pas un premier seuil prédéfini, de la durée d'activation du premier tube de commutation et/ou du quatrième tube de commutation dans un cycle de commutation pour qu'elle soit une seconde durée, dans lequel la seconde durée est comprise dans un intervalle de seuil prédéfini, et l'intervalle de seuil prédéfini est une plage de temps dans laquelle le premier tube de commutation et/ou le quatrième tube de commutation sont dans un état activé dans un cycle de commutation lorsque l'onduleur est dans un état de fonctionnement normal.

8. Procédé selon la revendication 6, dans lequel le réglage de la durée d'activation du premier tube de commutation et/ou du quatrième tube de commutation au cours d'un cycle de commutation sur la base des températures des deux diodes de blocage de point neutre pour commander un courant traversant les deux diodes de bocage de point neutre comprend :
la commande, lorsque les températures des deux diodes de blocage de point neutre ne dépassent pas un premier seuil prédéfini, de la durée d'activation du premier tube de commutation et/ou du quatrième tube de commutation dans un cycle de commutation pour qu'elle soit une seconde durée, dans lequel la seconde durée est comprise dans un intervalle de seuil prédéfini, et l'intervalle de seuil prédéfini est une plage de temps dans laquelle le premier tube de commutation et/ou le quatrième tube de commutation sont dans un état activé dans un cycle de commutation lorsque l'onduleur est dans un état de fonctionnement normal.

9. Procédé selon l'une quelconque des revendications 6 à 8, dans lequel la détection de températures des deux diodes de blocage de point neutre comprend :
le commencement de la détection, lorsqu'il est détecté qu'une tension à un point raccordé au réseau de l'onduleur est inférieure à un troisième seuil prédéfini ou qu'un courant à un point raccordé au réseau de l'onduleur est supérieur à un quatrième seuil prédéfini, des températures des deux diodes de blocage de point neutre.

10. Système d'alimentation électrique (2), dans lequel le système d'alimentation électrique comprend un réseau photovoltaïque et l'onduleur selon les revendications 1 à 5 qui est connecté au réseau photovoltaïque, et le réseau photovoltaïque est configuré pour envoyer l'énergie électrique obtenue par conversion à l'onduleur pour un traitement d'inversion.
